(19) Europäisches Patentamt
European Patent Office
Office européen des brevets

(11) **EP 3 607 294 B1**

(12) **EUROPÄISCHE PATENTSCHRIFT**

(45) Veröffentlichungstag und Bekanntmachung des Hinweises auf die Patenterteilung:
**24.05.2023 Patentblatt 2023/21**

(21) Anmeldenummer: **18716255.7**

(22) Anmeldetag: **06.04.2018**

(51) Internationale Patentklassifikation (IPC):
***G01M 13/02*** *(2019.01)*

(52) Gemeinsame Patentklassifikation (CPC):
**G01M 13/021; G01M 13/02; G01M 13/022; G01M 13/026**

(86) Internationale Anmeldenummer:
**PCT/EP2018/058860**

(87) Internationale Veröffentlichungsnummer:
**WO 2018/185286 (11.10.2018 Gazette 2018/41)**

(54) **VERFAHREN ZUM STEUERN, INSBESONDERE REGELN, EINES ANTRIEBSSTRANGPRÜFSTANDS MIT REALEM GETRIEBE**

METHOD FOR CONTROLLING, IN PARTICULAR REGULATING, A POWERTRAIN TEST BENCH WITH A REAL GEARBOX

PROCEDE DE COMMANDE, NOTAMMENT DE REGLAGE, D'UN BANC D'ESSAI DU GROUPE MOTOPROPULSEUR AVEC UNE VRAIE BOITE DE VITESSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2017 AT 502912017**

(43) Veröffentlichungstag der Anmeldung:
**12.02.2020 Patentblatt 2020/07**

(73) Patentinhaber: **AVL List GmbH**
**8020 Graz (AT)**

(72) Erfinder:
• **PFISTER, Felix**
**8010 Graz (AT)**
• **FLECK, Andreas**
**2344 Maria Enzersdorf (AT)**

(74) Vertreter: **Hahner, Ralph et al**
**Wallinger Ricker Schlotter Tostmann**
**Patent- und Rechtsanwälte Partnerschaft mbB**
**Zweibrückenstraße 5-7**
**80331 München (DE)**

(56) Entgegenhaltungen:
| | |
|---|---|
| EP-A2- 2 161 560 | WO-A1-2011/022746 |
| WO-A1-2011/038429 | WO-A1-2016/012575 |
| WO-A1-2016/102555 | US-A1- 2016 327 451 |

**Beschreibung**

Die Erfindung betrifft ein Verfahren zum Steuern, insbesondere Regeln, eines Prüfstands für einen Antriebsstrang mit einem realen Getriebe.

Auf Fahrzeugprüfständen oder Prüfständen für Antriebsstränge können wenigstens einzelne Komponenten des Antriebsstrangs eines Kraftfahrzeugs getestet werden. Je nachdem, welche Komponente oder Komponenten getestet werden, kommen dabei ein Rollenprüfstand, ein Motorprüfstand, ein Getriebeprüfstand, etc. zum Einsatz.

Ein Prüfling, also die zu testende Vorrichtung, wird dabei einem Prüflauf unterworfen, um Eigenschaften des Prüflings zu prüfen. Um dies zu erreichen, werden während eines Prüflaufs mittels geeigneter Messsensoren bestimmte Messgrößen erfasst und in Echtzeit oder zeitversetzt (postmortem) ausgewertet.

Der Prüfling ist dabei im Allgemeinen eine Kombination aus einer Anzahl von realen Komponenten und einer Anzahl von virtuellen Komponenten, wobei die realen Komponenten real als Bauteile am Prüfstand aufgebaut sind und die virtuellen Komponenten mittels Simulationsmodellen, insbesondere in Echtzeit, simuliert werden und auf diese Weise die realen Komponenten zu einem Gesamtsystem ergänzen. Der Prüfling kann daher vorteilhafterweise in einen realen Prüfling (Real Unit Under Test - rUUT), welcher die realen Komponenten umfasst, und einem virtuellen Prüfling (Virtual Unit Under Test - vUUT), welcher die virtuellen Komponenten umfasst, gegliedert werden. Beispiele für solche Prüflinge sind ein Kraftfahrzeug, ein Antriebsstrang, oder auch lediglich kleinere Systeme wie ein Powerpack, ein Hybridantrieb oder auch Getriebe.

Der Prüflauf ist ein zeitlicher Ablauf von Zuständen des Prüflings, welche am Prüfstand mittels einer Steuerung oder Regelung eingestellt werden.

Im Falle eines Antriebsstrangprüfstand ist der reale Prüfling des Weiteren mit einer Belastungsmaschine verbunden, welche dem Prüfling gemäß dem Prüfverlauf eine Last, zum Beispiel ein positives oder negatives Lastdrehmoment oder eine Drehzahl, oder einen anders definierten Belastungszustand vorgibt. Der reale Prüfling wird nach den Vorgaben des Prüflaufs unter dieser Last bzw. diesem Belastungszustand betrieben.

Beispielsweise können auf dem Prüfstand eine Verbrennungskraftmaschine und ein Getriebe real vorhanden sein, wobei das Getriebe, vorzugsweise über den Getriebeausgang, mit der Belastungsmaschine mechanisch gekoppelt ist.

Der Verbrennungsmotor und das Getriebe werden dann gemäß einem Prüflauf angesteuert, beispielsweise durch Verstellen der Drosselklappe des Verbrennungsmotors, durch eine Vorgabe des Gangs oder durch einstellen einer bestimmten Drehzahl am Getriebeausgang.

Die Belastungsmaschine wird durch zeitlich veränderliche Soll-Momente T oder eine Soll-Drehzahlen n gesteuert, deren Vorgabe zu einer Last bzw. einem Belastungszustand des Prüflings führt.

Der Verlauf des Soll-Moments oder der Soll-Drehzahl hängt dabei von den in dem Prüflauf vorgegebenen Betriebspunkten ab, welche getestet werden sollen. Des Weiteren können bei der Vorgabe dieser Soll-Momente T oder der Soll-Drehzahlen n des virtuellen Prüfling, also die virtuellen Komponenten ders Antriebsstrangs, wie zum Beispiel Wellen, Differential, Achse, Reifen, und die Interaktion mit der Umgebung des Prüflings, zum Beispiel der Kontakt zwischen Reifen und Straße, mittels Simulationsmodellen simuliert werden.

An den Schnittstellen zwischen den realen Komponenten und den virtuellen Komponenten werden zeitliche veränderliche Parameter, insbesondere Drehzahlen oder Drehmomente, in Echtzeit übergeben.

Eine besondere Herausforderung ist es, auf dem Prüfstand, welcher virtuelle Komponenten und reale Komponenten eines Antriebsstrang-Prüflings umfasst, dynamische Systeme und Prozesse abzubilden.

Das Dokument WO 2011/022746 A1 betrifft eine Regelung einer Prüfstandsanordnung, die einen Prüfling, zum Beispiel einen Verbrennungsmotor oder einen Fahrzeugantriebsstrang, enthält, der zumindest einen Drehwinkel als Ausgang hat und mit zumindest einer Belastungseinheit über zumindest eine Verbindungswelle verbunden ist. In einem den mechanischen Widerstand für den Prüfling beschreibenden Impedanz-Modell wird, ausgehend von vom Prüfling hergeleiteten Eingangsgrößen, ein Soll-Wert des Drehmoments der Verbindungswelle als Ausgangsgröße berechnet und dieser Soll-Wert einer Drehmoment-Regelung für die Belastungseinheit zugrunde gelegt.

Das Dokument AT 514725 B1 betrifft ein Verfahren zur Ermittlung des Vortriebsmoments eines Drehmomenterzeugers, der auf einem Prüfstand aufgebaut ist, wobei ein inneres Drehmoment des Drehmomenterzeugers gemessen wird und anhand des gemessenen inneren Drehmoments aus einer Bewegungsgleichung mit dem gemessenen inneren Drehmoment, einem dynamischen Drehmoment und einem an einer Abtriebswelle des Drehmomenterzeugers gemessenen Wellenmoment ein Korrekturmoment geschätzt wird und aus dem geschätzten Korrekturmoment und dem gemessenen inneren Drehmoment das Vortriebsmoment gemäß der Beziehung $M_V = \hat{M}_{COR} + M_I$ berechnet wird. Andere für die Erfindung relevante Dokumente des Standes der Technik sind Patentdokumente WO 2016/012575 A1, WO 2011/038429 A1, EP 2 161 560 A2, US 2016/327451 A1, und WO 2016/102555 A1. Keines dieser Dokumente offenbarte das Testen eines realen Getriebes, während das Getriebe selbst zusammen mit allen anderen Komponenten eines Antriebsstrangs modelliert und simuliert wird.

Es ist eine Aufgabe der Erfindung, ein verbessertes Verfahren und ein verbessertes System zum Steuern eines Prüfstands für mit realen Getrieben als Teil der des realen Prüflings bereitzustellen. Insbesondere ist es eine Aufgabe der Erfindung, ein Verfahren zum Steuern eines Prüfstands mit einem realen Getriebe als Teil des realen Prüflings bereitzustellen, bei dem der Prüfling als Teil des virtuellen Prüflings, d.h. einer virtuellen Teilkomponente des Prüflings, wenigstens eine flexible Welle insbesondere am Getriebeausgang aufweist. Im Gegensatz zu einem Modell einer "steife Welle" berücksichtigt ein Modell einer "flexiblen Welle" die einzelnen Teile einer Welle und deren Elastizitäten, Dämpfungen und nachgelagerten Massen, welche zusammen mit der rUUT ein schwingungsfähiges System bilden.

Diese Aufgabe wird gelöst durch ein Verfahren zum Steuern und/oder Regeln eines Prüfstands für einen Antriebsstrang nach Anspruch 1 und ein System zum Steuern und/oder Regeln eines Prüfstands für einen Antriebsstrang nach Anspruch 16. Vorteilhafte Ausgestaltungen werden in den Unteransprüchen beansprucht. Die Lehre der Unteransprüche wird ausdrücklich zum Bestandteil der Beschreibung gemacht.

Ein erster Aspekt der Erfindung betrifft ein Verfahren zum Steuern, insbesondere Regeln, eines Prüfstands für einen Antriebsstrang mit einem realen Getriebe, welches vorzugsweise folgende Arbeitsschritte aufweist:

- Berechnen eines Soll eines Steuerparameters, insbesondere einer Soll-Drehzahl, des Getriebeausganges des realen Getriebes auf der Grundlage bzw. mittels eines Modells, insbesondere eines virtuellen Prüflings, welches das Getriebe oder Teile des Getriebes (zB seine Trägheiten und/oder die auf die Ausgangswelle kondensierten rotatorischen Trägheiten des Getriebes) und wenigstens eine weitere Komponente, insbesondere eine Welle, der Abtriebsseite des Antriebsstrangs, insbesondere die Wellen, Differentiale, Räder, Reifen, als virtuelle Komponenten, insbesondere des virtuellen Prüflings, abbildet, auf der Grundlage wenigstens eines am Antriebsstrang gemessenen Messparameters, insbesondere einer Drehzahl und/oder eines Drehmoments; und

- Steuern des Prüfstands, insbesondere einer Belastungsmaschine, auf der Grundlage des Solls (insbesondere der Soll-Drehzahl).

Ein zweiter Aspekt der Erfindung betrifft ein System zum Steuern, insbesondere Regeln, eines Prüfstands für einen Antriebsstrang mit einem realen Getriebe, wobei das System vorzugsweise aufweist:

- Ein erstes Modul zum Berechnen eines Solls eines Steuerparameters, insbesondere einer Soll-Drehzahl, am Getriebeausgang des realen Getriebes auf der Grundlage bzw. mittels eines Modells, welches das Getriebe und wenigstens eine weitere Komponente, insbesondere eine Welle, der Abtriebsseite des Antriebsstrangs als virtuelle Komponenten abbildet, auf der Grundlage wenigstens eines am Antriebsstrang gemessenen Messparameters, insbesondere wenigstens eine Drehzahl und/oder ein Drehmoment; und

- ein zweites Modul zum Steuern des Prüfstands, insbesondere einer Leistungsmaschine, auf der Grundlage des Solls (insbesondere der Soll-Drehzahl).

Ein Getriebe im Sinne der Erfindung weist Komponenten auf, welche zur Untersetzung bzw. Übersetzung eines Drehmoments und einer Drehzahl geeignet sind. Insbesondere ist ein Getriebe in Übersetzungsstufen schaltbar oder ein Getriebe mit kontinuierlich veränderbarer Übersetzung.

Ein Getriebeeingang ist jeder Anschluss des Getriebes, welcher im bestimmungsgemäß eingebauten Zustand in einem Fahrzeug mit einer Antriebsmaschine verbunden ist. Vorzugsweise kann ein Getriebe mehrere Getriebeeingänge aufweisen, um beispielsweise bei einem Hybridfahrzeug mehrere Antriebsmaschinen mit einem Abtrieb zu koppeln.

Ein Getriebeausgang im Sinne der Erfindung ist jeder Anschluss eines Getriebes, welcher im bestimmungsgemäß eingebauten Zustand mit dem zu den Rädern führenden Teil des Antriebsstrangs, dem Restantriebsstrang, verbunden ist.

Vorzugsweise weisen sowohl der Getriebeeingang als auch der Getriebeausgang einen Flansch auf, welcher mit einer antriebsseitigen oder abtriebsseitigen Welle verbindbar sind.

Ein Antriebsstrang im Sinne der Erfindung weist jene Komponenten auf, welche eingerichtet sind, um zum Antrieb eines Fahrzeugs beizutragen, insbesondere Motor, Getriebe, Wellen, Differentiale, Räder, Reifen, etc.

Ein Antriebsstrang im Sinne der Erfindung, welcher Prüfling auf einem Prüfstand ist, weist wenigstens ein reales Getriebe auf. Vorzugsweise werden andere Komponenten des Antriebsstrangs als virtuelle Komponenten simuliert. Weiter vorzugsweise weist ein solcher Antriebsstrang mehrere reale Komponenten und mehrere virtuelle Komponenten auf. Die realen Komponenten werden als reale Bauteile am Prüfstand aufgebaut. Die virtuellen Komponenten sind als Simulationsmodelle, insbesondere in Echtzeit, hinterlegt und werden zur Ergänzung der realen Komponente simuliert, um diese zu einem Antriebsstrang zu ergänzen.

Ein Soll im Sinne der Erfindung ist ein Sollwert oder auch ein Sollwertverlauf. Vorzugsweise weist ein Soll Werte auf, weiter vorzugsweise weist dieses Kennfelder und/oder Funktionen auf.

Ein axiales Trägheitsmoment ist die axiale Trägheit rotierender Teile des realen Getriebes bezogen auf eine Drehachse der Getriebeausgangswelle. Vorzugsweise wird es durch die axiale Trägheit im ersten Gang des Getriebes definiert und ist ein vorzugsweise zeitinvarianter Parameter. Es umfasst vorzugsweise auch die Trägheiten derjenigen Körper, die über kinematische Zwangsbedingungen an die Drehbewegung der Getriebeausgangswelle gekoppelt sind, und stellt in diesem Fall ein sogenanntes erweitertes Trägheitsmoment dar.

Stabilisieren im Sinne der Erfindung ist ein Verbessern der Qualität von gemessenen Parametern durch Heranziehung der Werte von anderen Messparametern. Zum Stabilisieren kann insbesondere eine sogenannte Sensor-Fusion-Methode eingesetzt werden. Durch eine Stabilisierung kann insbesondere ein Messrauschen verringert oder sogar beseitigt werden. Beispielsweise kann eine Zielfunktion eines Messparameters Gewichtungsfaktoren enthalten, welche beispielsweise mittels eines Kalman-Filters berechnet werden können.

Ein Modul im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessor-Einheit (CPU), und/oder ein oder mehrere Programme oder Programm-Module aufweisen. Die Mikroprozessor-Einheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren verkörpert bzw. auszuführen imstande ist, so dass die Mikroprozessor-Einheit die Schritte solcher Verfahren ausführen kann und damit insbesondere einen Prüfstand steuern und/oder regeln kann.

Die Erfindung basiert auf dem Ansatz, für eine Steuerung des Prüfstands, welcher als Prüfling einen Antriebsstrang mit einem realen Getriebe aufweist, dieses Getriebe bzw. wenigstens dessen Trägheitsmoment bei einer Simulation der restlichen Komponenten des Antriebsstrangs, welche nicht real auf dem Prüfstand aufgebaut sind, sondern nur als virtuelle Komponenten vorliegen, zu berücksichtigen. Das Getriebe ist somit nicht nur Teil des realen Prüflings, sondern auch des virtuellen Prüflings. Der reale Prüfling und der virtuelle Prüfling sind auf diese Weise nicht disjunkt bzw. komplementär zueinander, sondern überlappen sich in Bezug auf wenigstens einige Elemente des Getriebes, insbesondere die Getriebeträgheit.

Ein Vorteil der Berücksichtigung des Getriebes im virtuellen Prüfling besteht darin, dass das Trägheitsmoment des Getriebes bei der Simulation eines Restantriebsstrang, welcher aus Komponenten gebildet wird, die nicht Teil des realen Prüflings sind, berücksichtigt wird. Handelt es sich beispielsweise um einen Getriebeprüfstand, so sind die Komponenten des Restantriebsstrangs beispielsweise die Welle, das Differential, die Achse und die Räder und Reifen usw.. Durch die Berücksichtigung des Getriebes, mit seinem relativ großen axialen Trägheitsmoment auch als Teil des virtuellen Prüflings, kann verhindert werden, dass der Restantriebsstrang aufgrund seiner relativ geringen Trägheit bei einer dynamischen Simulation in Schwingung gerät, welche eine Steuerung der durch eine Belastungsmaschine bereitgestellten Last unmöglich machen würde oder wenigstens wesentlich erschweren würde. Insbesondere ist es durch die Erfindung möglich, in dem zur Simulation benutzten Modell eine sogenannte flexible Welle (flexible shaft) als virtuelle Komponente vorzusehen und den Prüfstand dennoch stabil zu betreiben, da das aufgrund des Zustandes der realen Komponente berechnete Vortriebsmoment auf einen Körper großer mechanischer Trägheit, nämlich den Getriebeausgang wirkt.

In einer vorteilhaften Ausgestaltung der Erfindung berücksichtigt das Modell Eigenschaften eines Fahrzeugs, insbesondere eine Masse und/oder eine Trägheit des Fahrzeugs und/oder Elastizitäten der Getriebeausgangswelle/n, sowie Eigenschaften der Fahrbahn, insbesondere einen Reibungs- und/oder Rollwiderstandskoeffizienten. Durch die Berücksichtigung der Eigenschaften des Fahrzeugs und gegebenenfalls weiterer Umwelteigenschaften kann ein Verhalten eines Antriebsstrangs im realen Betrieb auf dem Prüfstand noch realistischer abgebildet werden.

In einer weiteren vorteilhaften Ausgestaltung berücksichtigt das Modell wenigstens ein Eintriebsmoment, welches insbesondere von dem wenigstens einen Messparameter abhängt, des realen Getriebes als, insbesondere zeitinvarianten, Eingangsparameter.

Dieses Eintriebsmoment im Sinne der Erfindung ist ein inneres Getriebemoment und stellt das im Getriebe anliegende Drehmoment dar. Vorzugsweise berücksichtigt dieses das axiale Trägheitsmoment des Getriebes. Durch die Berücksichtigung dieses Eintriebsmoments in dem Modell bzw. bei der Simulation kann das Getriebe, insbesondere dessen Trägheitsmoment, als weitere virtuelle Komponente dem virtuellen Prüfling hinzugefügt werden. D.h., das Getriebe ist auch eine der virtuellen Komponenten des Restantriebsstrangs. Hierdurch erhöht sich insbesondere das relativ geringe Trägheitsmoment des Restantriebsstrangs und dieser wird in der Simulation weniger anfällig für Eigenschwingung, insbesondere wenn als Welle eine flexible Welle vorgesehen ist. Das Bereitstellen des Eintriebsmoments des realen Getriebes als Eingangsparameter in das Modell ist des Weiteren vorteilhaft, da eine Vielzahl bereits existierender virtueller Fahrzeugmodelle eine Schnittstelle aufweisen, um einen Eingangsparameter, wie das erfindungsgemäße Eintriebsmoment, zu berücksichtigen. Zur Berücksichtigung des Eintriebsmoments muss die jeweilige Struktur der bestehenden virtuellen Fahrzeugmodelle daher nicht verändert werden.

Erfindungsgemäß werden vorzugsweise auf Grundlage der an dem realen Prüfling verbauten Sensorik verrauschte Messwerte in Echtzeit eingelesen. Aus diesen verrauschten Messwerten werden über geeignete numerische Methoden qualitativ hochwertigere zeitlich veränderliche physikalische Parameter in Echtzeit ermittelt, insbesondere die Getriebeausgangsdrehzahl und das Drehmoment am Getriebeausgang, vorzugsweise auch die Drehzahl am getriebeeingang und das Moment am Getriebeeingang. Aus diesen Größen wiederum wird das Eintriebsmoment mittels eines Momentenschätzers ermittelt.

In einer weiteren vorteilhaften Ausgestaltung weist das erfindungsgemäße Verfahren des Weiteren folgenden Arbeitsschritt auf:

- Berechnen eines Eintriebsmoments, insbesondere in Echtzeit, auf der Grundlage des axialen Trägheitsmoments des realen Getriebes, einer mittels einer Messung, insbesondere mit nachgelagerter Echtzeitalgorithmen, bestimmten Winkelbeschleunigung des Getriebeausgangs des realen Getriebes und eines gemessenen Drehmoments des Getriebeausgangs des realen Getriebes.

Entsprechend weist das System in einer vorteilhaften Ausgestaltung ein drittes Modul zum Berechnen eines Eintriebsmoments des Getriebes, insbesondere in Echtzeit, auf der Grundlage des axialen Trägheitsmoments des realen Getriebes, einer mittels einer Messung bestimmten Winkelbeschleunigung des Getriebeausgangs des realen Getriebes und eines gemessenen Drehmoments des Getriebeausgangs des realen Getriebes auf.

In einer weiteren vorteilhaften Ausgestaltung der Erfindung wird ein aus der Winkelbeschleunigung des Getriebeausgangs und des axialen Trägheitsmoments des Getriebes berechnetes, insbesondere dynamisches, Drehmoment zu dem gemessenen, und vorzugsweise entsprechend in Echtzeit aufbereiteten, Drehmoment des Getriebeausgangs addiert. Das Eintriebsmoment am Getriebeeingang wird somit aus den relativ einfach zu messenden bzw. zu ermittelnden Parametern der Winkelbeschleunigung und des anliegenden Drehmoments am Getriebeausgang bestimmt.

Insbesondere kann das Getriebe hierbei auch bei bestehenden Prüfständen als virtuelle Komponente des virtuellen Prüflings berücksichtigt werden.

In einer weiteren vorteilhaften Ausgestaltung der Erfindung wird bei der Berechnung des Eintriebsmoments und/oder des Solls (insbesondere der Soll-Drehzahl) eine jeweils vorliegende Übersetzung des zu prüfenden Getriebes berücksichtigt. In einer Variante der Erfindung wird das axiale Trägheitsmoment in Abhängigkeit einer jeweils vorliegenden Übersetzung des zu prüfenden Getriebes berücksichtigt. Hierdurch können insbesondere Unterschiede, welche sich beim axialen Trägheitsmoment des Getriebes in verschiedenen Übersetzungen ergeben, berücksichtigt werden. Die Genauigkeit des Modells kann auf diese Weise erhöht werden.

In einer weiteren vorteilhaften Ausgestaltung der Erfindung werden das Drehmoment des Getriebeausgangs und/oder eine Drehzahl des Getriebeausgangs an dem Prüfstand gemessen. Insbesondere aus der Drehzahl des Getriebeausgangs kann die Winkelbeschleunigung des Getriebeausgangs bestimmt werden.

In einer weiteren vorteilhaften Ausgestaltung der Erfindung wird/werden das Drehmoment am Getriebeausgang und/oder die Winkelbeschleunigung des Getriebeausgangs jeweils mittels eines Filters gefiltert, wobei vorzugsweise der Filter aus den folgenden Filtern gewählt wird: Tiefpassfilter zweiter Ordnung, Bessel-Filter, Butterworth-Filter, Notch-Filter, Kalmanfilter. Durch eine Filterung der Signale kann eine Verrauschung verringert oder sogar beseitigt werden.

In einer weiteren vorteilhaften Ausgestaltung der Erfindung wird eine Drehzahl des Getriebeausgangs mittels weiterer Messwerte, beispielsweise einer Drehzahl des Getriebeeingangs, berechnet und/oder stabilisiert.

In einer weiteren vorteilhaften Ausgestaltung weist das erfindungsgemäße Verfahren des Weiteren folgende Arbeitsschritte auf:

- Berechnen der Winkelbeschleunigung des Getriebeausgangs aus der gemessenen, vorzugsweise stabilisierten Drehzahl des Getriebeausgangs; und/oder

- Messen der Winkelbeschleunigung bzw. Einlesen der Winkelbeschleunigung über geeignete Sensoren.

Eine Winkelbeschleunigung kann beispielsweise mittels des Ferraris-Prinzips gemessen werden. Wird die Winkelbeschleunigung sowohl gemessen als auch berechnet, können Kalman-Filter zur Anwendung gebracht werden, um ein Signalrauschen weiter zu reduzieren bzw. zu beseitigen. Auf diese Weise kann mit einer an einem herkömmlichen Prüfstand im Allgemeinen zur Verfügung stehenden Messtechnik und im Stand der Technik bekannte Echtzeit-Algorithmen die Winkelbeschleunigung am Getriebeausgang des realen Getriebes in Echtzeit berechnet werden. Vorzugsweise geht diese Winkelbeschleunigung als Eingangsparameter in die Berechnung des Eintriebsmoments ein.

Entsprechend weist das System in einer vorteilhaften Ausgestaltung auf:

- ein viertes Modul zum Berechnen der Winkelbeschleunigung des Getriebeausgangs aus der gemessenen, vorzugsweise stabilisierten, Drehzahl des Getriebeausgangs; und/oder

- ein fünftes Modul zum Messen der Winkelbeschleunigung über geeignete Sensoren.

In einer weiteren vorteilhaften Ausgestaltung weist das erfindungsgemäße Verfahren des Weiteren folgenden Arbeitsschritt auf:

- Berechnen oder Stabilisieren des Drehmoments des Getriebeausgangs mittels eines Drehmoments des Getriebeeingangs.

Auch hierdurch kann eine Messung des Drehmoments am Getriebeausgang durch die Messung des am Getriebeeingang anliegenden Drehmoments von etwaigem Rauschen bereinigt werden.

Entsprechend weist das System in einer vorteilhaften Ausgestaltung auf:

- ein sechstes Modul zum Berechnen oder Stabilisieren des Drehmoments des Getriebeausgangs mittels eines Drehmoments des Getriebeeingangs.

In einer weiteren vorteilhaften Ausgestaltung der Erfindung wird das Drehmoment des Getriebeausgangs mittels einer Messung eines elektrischen Luftspaltmoments einer Belastungsmaschine des Prüfstands bestimmt. In diesem Fall muss am Getriebeausgang kein weiterer Sensor zur Messung des Drehmoments vorgesehen sein.

Die im Vorhergehenden in Bezug auf das Verfahren des ersten Aspekts der Erfindung beschrieben Merkmale und Vorteile gelten entsprechend auch für das System des zweiten Aspekts der Erfindung und umgekehrt.

In einer vorteilhaften Ausgestaltung weist das erfindungsgemäße System einen ersten Sensor zur Bestimmung bzw. Messung der Winkelbeschleunigung des Getriebeausgangs, insbesondere mittels Messen zumindest eines Messparameters; und einen zweiten Sensor zur Messung des Drehmoments des Getriebeausgangs auf.

Weitere Merkmale und Vorteile der Erfindung ergeben sich aus der nachfolgenden Beschreibung anhand der Figuren. Die Figuren zeigen wenigstens teilweise schematisch:

Fig. 1    ein Ausführungsbeispiel des erfindungsgemäßen Systems, welches an einem Prüfstand installiert ist; und

Fig. 2    ein Flussdiagramm eines Ausführungsbeispiels des erfindungsgemäßen Verfahrens.

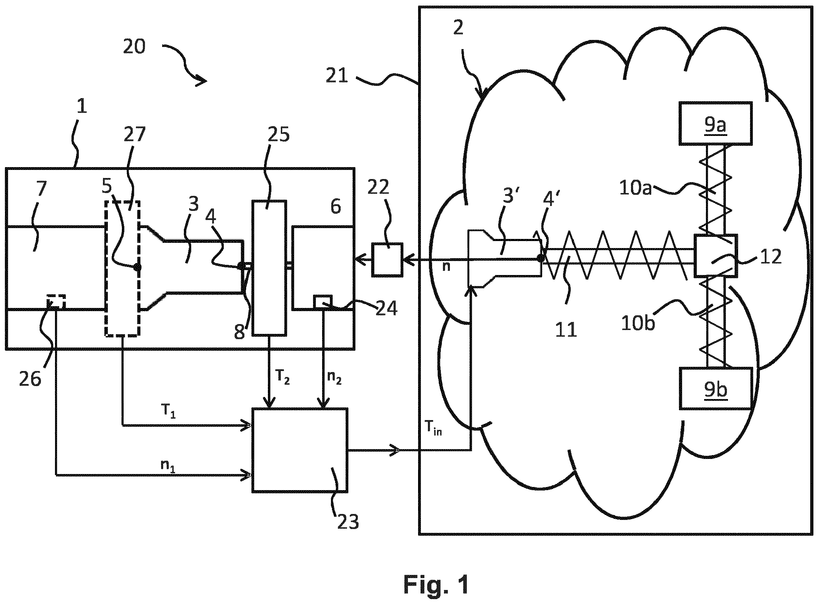

Anhand der **Fig. 1,** welche ein Ausführungsbeispiel des erfindungsgemäßen Systems 20 an einem zu steuernden Getriebeprüfstand 1 darstellt, wird die erfindungsgemäße Lehre im Detail erläutert.

Auf dem Getriebeprüfstand 1 ist ein reales Getriebe 2 montiert, welches als reale Komponente eines Antriebsstrangs, der den Prüfling darstellt, einem Testbetrieb unterzogen wird. Für diese Aufgabe weist der Prüfstand eine Antriebsmaschine 7, vorzugsweise eine Elektromaschine, und eine Belastungsmaschine 6 auf, welche vorzugsweise ebenfalls als Elektromaschine ausgebildet ist.

Die Antriebsmaschine 7 stellt am Getriebeeingang 5 ein Drehmoment $T_1$ bereit. Die Belastungsmaschine 6 übt eine Last über eine Prüfstandswelle 8 auf den Getriebeausgang 4 aus. Durch eine einzustellende Drehzahl n am Getriebeausgang 4, die durch die Antriebsmaschine 7 eingebrachte Leistung und das von dem Getriebe 3 vorgegebene Übersetzungsverhältnis wird eine Leistung definiert, welche die Belastungsmaschine als Last abnehmen muss.

Das erfindungsgemäße System 20 zur Steuerung des Prüfstands weist vorzugsweise drei Module auf.

Ein erstes Modul 21 des Systems 20 zum Steuern des Prüfstands 1 ist eingerichtet, um eine Soll-Drehzahl n am Getriebeausgang 4 des realen Getriebes 3, welches auf dem Prüfstand 1 montiert ist, zu berechnen. Hierfür ist in einem Datenverarbeitungssystem, insbesondere einem Datenspeicher, des ersten Moduls 21 vorzugsweise ein echtzeitfähiges Modell 2 abgelegt, welches als virtuelle Komponenten des Prüflings ein virtuelles Getriebe 3', eine flexible Welle 15, ein Differential 16 sowie eine Fahrzeugachse 10a, 10b samt Rädern 9a, 9b simulieren kann. Vorzugsweise kann der simulierte Restantriebsstrang auch weniger oder mehr virtuelle Komponenten aufweisen. Beispielsweise kann das Modell als virtuelle Komponente zusätzlich zu der flexiblen Welle 11 auch ein Differential 12 berücksichtigen.

Zur Berechnung einer auf dem Prüfstand 1 einzustellenden Soll-Drehzahl n am Getriebeausgang 4 gehen in das Modell 2 Informationen über den Betriebszustand des Prüfstands 1 ein, welche durch die Messung eines Messparameters in Bezug auf den Antriebsstrang 2, insbesondere wenigstens einer Drehzahl $n_1$, $n_2$ und/oder eines Drehmoments $T_1$, $T_2$, bestimmt werden. Vorzugsweise handelt es sich um zwei Messparameter, eine Drehzahl $n_2$ des Getriebeausgangs 4 des realen Getriebes 3 und ein Drehmoment $T_2$ des Getriebeausgangs 4 des realen Getriebes 3.

Aus diesen beiden Messparametern wird von einem dritten Modul 23 des Systems 20 ein Eintriebsmoment bzw. inneres Getriebemoment $T_{in}$ des Getriebes 3 bzw. des virtuellen Getriebes 3', insbesondere in Echtzeit, berechnet.

Dieses Eintriebsmoment $T_{in}$ geht als Eingangsparameter in das Modell 2 ein, auf dessen Grundlage das erste Modul 21 die Soll-Drehzahl n berechnet. Vorzugsweise ist der Eingangsparameter $T_{in}$ dabei zeitinvariant, das heißt er nimmt bei gleicher Wertekonstellation der jeweiligen Messparameter zu jedem Zeitpunkt einen gleichen Wert an.

Das Eintriebsmoment $T_{in}$ wird von dem dritten Modul 23 dabei vorzugsweise nach folgender Beziehung bestimmt:

$$T_{in} = T_2 + J_y \cdot \alpha\,(t)$$

Gleichung (1)

Gleichung (1) ist hat die Form einer Eulerschen Differentialgleichung, welche erfindungsgemäß nummerisch gelöst wird wobei

$\alpha\,(t)$ die Winkelbeschleunigung des Getriebeausgangs 4 ist,

$J_y$ das axiale Trägheitsmoment des realen Getriebes ist,

$T_2$ das axiale Drehmoment der Prüfstandswelle 8 ist.

Die Winkelbeschleunigung $\alpha\,(t)$ des Getriebeausgangs 4 lässt sich durch Ableitung der Drehzahl $n_2$ der Prüfstandswelle 8 ermitteln, welche drehfest mit dem Getriebeausgang 4 und der Belastungsmaschine 6 verbunden ist.

Hierfür weist das System 1 vorzugsweise einen ersten Sensor 24 auf, beispielsweise einen Inkrementalgeber, welcher eingerichtet ist, eine Drehung des Rotors der Belastungsmaschine 6 und/oder der Prüfstandswelle 8 festzustellen. Alternativ kann die Belastungsmaschine 6 auch über einen eigenen Drehzahlsensor verfügen, welcher die Drehzahl $n_2$ dem dritten Modul 23 des Systems 1 zur Verfügung stellt. Die Drehzahl $n_2$ kann hierbei beispielsweise anhand des von der Belastungsmaschine 6 erzeugten elektromagnetischen Wechselfeldes bestimmt werden.

Die Winkelgeschwindigkeit $\alpha\,(t)$ ergibt sich mittels nummerischer Differenzierung der Drehzahl $n_2$ am Getriebeausgang 4 dabei aus der folgenden Gleichung:

$$\alpha(t) = \frac{n_2(t+\Delta t) - n_2\,(t)}{\Delta t}$$

Gleichung (2)

Um hier die Qualität des Messsignals, beispielsweise eines Signals des Inkrementalgebers, zu verbessern, können verschiedene Filterungen auf das Signal angewandt werden, um dessen Qualität zu verbessern. Insbesondere sind hierfür Tiefpassfilter zweiter Ordnung, Bessel-Filter, Butterworth-Filter oder auch Notch-Filter, geeignet. Auch Kalmanfilter können angewendet werden.

Zusätzlich oder alternativ kann auch eine Drehzahl $n_1$ am Getriebeeingang 5 gemessen werden. Über das Übersetzungsverhältnis des Getriebes 3 kann aus dieser Drehzahl $n_1$ vorzugsweise auf die Drehzahl am Getriebeausgang 4 zurückgeschlossen werden. Die Drehzahl $n_1$ kann mittels eines gesonderten Drehzahl-Sensors 26, insbesondere an der Belastungsmaschine 6, welche drehfest mit dem Getriebeeingang 5 des Getriebes 3 verbunden ist, gemessen werden. Der Sensor 26 kann dabei ein Bestandteil der Antriebsmaschine 7 sein oder auch ein zusätzlicher Sensor des erfindungsgemäßen Systems 20, welcher an der Belastungsmaschine 7 oder zwischen der Belastungsmaschine 7 und dem Getriebeeingang 5 angeordnet ist, um die Drehzahl $n_1$ zu messen.

Liegen sowohl die Drehzahl $n_1$ am Getriebeeingang 5 als auch die Drehzahl $n_2$ am Getriebeausgang 4 vor, so können Sensor-Fusion- bzw. Informationsfusion-Methoden angewandt werden, um die Daten in Bezug auf $n_1$ und $n_2$, gegebenenfalls unter Benutzung des Übersetzungsverhältnisses i des Getriebes, zu verknüpfen, um die Qualität des Drehzahlsignals am Getriebeausgang 4, welches für die Bestimmung des Eintriebsmoments $T_{in}$ maßgeblich ist, zu verbessern. Bei Sensor-Fusion bzw. Informations-Fusion werden Messsignale in geeigneter Weise zusammengeführt, um ein genaueres Abbild der Wirklichkeit zu generieren.

Zusätzlich ist es möglich, die Winkelbeschleunigung $\alpha\,(t)$, beispielsweise mittels des Ferraris-Prinzips, unmittelbar zu messen. Liegt diese unmittelbar gemessene Winkelbeschleunigung $\alpha\,(t)$ und beispielsweise die Drehzahl $n_2$ am Getriebeausgang 4 vor, welche beispielsweise an der Belastungsmaschine 6 bestimmt wird, so können auch hier Sensor-Fusion- bzw. Informationsfusion-Methoden zum Einsatz kommen, um eine Qualität des Signals der Winkelbeschleunigung $\alpha\,(t)$ ebenfalls zu verbessern.

Das axiale Trägheitsmoment $J_y$ des Getriebes 3, 3' ergibt sich vorzugsweise aus der folgenden Gleichung:

$$J_y = J_5 \cdot i_{1.Gang}^2 + J_4$$

Gleichung (3)

$J_5$ ist hierbei das gemessene Trägheitsmoment am Getriebeeingang 5 und $J_4$ das gemessene Trägheitsmoment des Getriebes 3 am Getriebeausgang 4, jeweils im ersten Gang, welcher die Übersetzung $i_{1.Gang}$ aufweist. Für die Trägheitsmomente $J_4$, $J_5$ und die Übersetzung $i_{1.Gang}$ können erfindungsgemäß vorzugsweise Näherungswerte verwendet werden.

Daher kann das axiale Trägheitsmoment $J_y$ des Getriebes 3, 3' im ersten Gang vorzugsweise auch für alle anderen Übersetzungen übernommen werden, d.h. in einer Näherung als konstant angenommen werden.

Der Wert für das axiale Trägheitsmoment $J_y$, welcher im dritten Modul 23 verwendet wird, sollte vorzugsweise derselbe sein, welcher auch im ersten Modul 21 zur Berechnung der Soll-Drehzahl n verwendet wird. Das heißt, jener Wert, welcher zur Bestimmung des Eintriebsmoments $T_{in}$ verwendet wird, sollte vorzugsweise identisch sein mit dem Wert für das axiale Trägheitsmoment $J_y$, welcher in dem erfindungsgemäßen Modell 2 zur Berechnung der Soll-Drehzahl n eingesetzt wird.

Das Drehmoment $T_2$ am Getriebeausgang 4 aus Gleichung (1) kann vorzugsweise mittels eines Drehmoment-Sensors 25 an der Prüfstandswelle 8 gemessen werden. Dieses gemessene Drehmoment $T_2$ entspricht dem Drehmoment am Getriebeausgang 4.

Auch die Qualität des aus dem Drehmomentsensor 25 gewonnenen Signals kann unter Anwendung verschiedener Signalfilter verbessert werden.

Zusätzlich kann das Drehmoment $T_1$ am Getriebeeingang 5 eingesetzt werden, um den Wert von des Drehmoments $T_2$ am Getriebeausgang 4, insbesondere unter Ausnutzung des Übersetzungsverhältnisses i des Getriebes 3, zu berechnen. Alternativ kann vorgesehen sein, das Messsignal des Drehmoments $T_2$ am Getriebeausgang 4 mittels des Drehmoments $T_1$ am Getriebeeingang 5 zu stabilisieren, insbesondere auch unter Ausnutzung von Sensor-Fusion- bzw. Informationsfusion-Methoden.

Alternativ oder zusätzlich kann auch eine Messung eines Luftspaltmoments der Belastungsmaschine 6 verwendet werden, um das Drehmoment $T_2$ am Getriebeausgang 4 zu berechnen und/oder zu stabilisieren.

Das in dem dritten Modul 23 berechnete Eintriebsmoment $T_{in}$ wird in das Modell 2 zur Berechnung einer Drehzahl n am Getriebeausgang 4, 4' eingespeist. Das Eintriebsmoment $T_{in}$ dient dabei insbesondere dazu, das axiale Trägheitsmoment $J_y$ des Getriebes 3, 3' bei der Simulation des Verhaltens des Restantriebsstrangs zu berücksichtigen.

Vorzugsweise wird die berechnete Drehzahl n an ein zweites Modul 22 des Systems 1 zum Steuern des Prüfstands, insbesondere zum Steuern der Belastungsmaschine 6, ausgegeben. Das zweite Modul 22 kann dabei sowohl Teil des erfindungsgemäßen Systems 20 sein als auch Teil einer bereits auf dem Prüfstand 1 vorhandenen Steuerung sein.

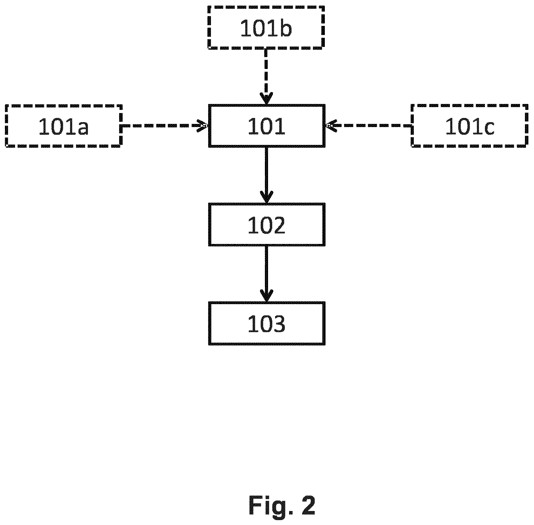

Das im Vorhergehenden anhand der Fig. 1 beschriebene Prinzip zur Steuerung eines Prüfstands 1 wird anhand der **Fig. 2** in einzelne Verfahrensschritte gegliedert.

Um ein Eintriebsmoment $T_{in}$ für die Simulation in dem Modell berechnen zu können, wird zunächst die Winkelbeschleunigung $\alpha$ (t) berechnet, 101a, vorzugsweise auf der Grundlage einer gemessenen Drehzahl $n_2$ des Getriebeausgangs 4. Alternativ oder zusätzlich wird die Winkelbeschleunigung a (t) über geeignete Sensoren gemessen, 101 b. Zusätzlich wird ein Moment $T_2$ des Getriebeausgangs gemessen oder mittels des Drehmoments $T_1$ des Getriebeeingangs 5 berechnet oder zusätzlich stabilisiert, 101c.

In einem nächsten Schritt wird das Eintriebsmoment $T_{in}$ in Echtzeit berechnet, wobei als Eingangsparameter das wie in Bezug auf Fig. 1 beschrieben berechnete axiale Trägheitsmoment $J_y$ des realen Getriebes 3, die Winkelbeschleunigung $\alpha$ (t) und das Drehmoment $T_2$ am Getriebeausgang 4 des realen Getriebes 3 eingehen.

In dem Modell 2 wird die Soll-Drehzahl $n$ am Getriebeausgang 4 mittels des Eintriebsmoments $T_{in}$ sowie weiterer Eigenschaften des Restantriebsstrangs, welcher vorzugsweise aus der Welle 11, dem Differential 12, der Achse 10a, 10b und den Rädern 9a, 9b besteht, berechnet, 102. Auf der Grundlage dieser Soll-Drehzahl $n$ wird der Prüfstand 1, insbesondere dessen Belastungsmaschine 6, gesteuert, 103.

Der beschriebene Steuerungsprozess ermöglicht eine Regelschleife eines Prüfstands 1 für einen Antriebsstrang mit realem Getriebe 3 und einer virtuellen flexiblen Welle 11, die einen stabilen Betrieb des Prüfstands 1 bei einer einzustellenden Drehzahl $n$ am Getriebeausgang 4 gewährleistet.


**Bezugszeichenliste**

| | |
|---|---|
| 1 | Prüfstand |
| 2 | Antriebsstrang |
| 3 | Getriebe |
| 4 | Getriebeausgang |
| 5 | Getriebeeingang |
| 6 | Belastungsmaschine |

| 7 | Antriebsmaschine |
| 8 | Prüfstandswelle |
| 9a, 9b | Rad |
| 10, 10b | Achsenabschnitt |
| 11 | Welle |
| 12 | Differential |
| 20 | System |
| 21 | erstes Modul |
| 22 | zweites Modul |
| 23 | drittes Modul |
| 24 | erster Sensor |
| 25 | zweiter Sensor |
| 26 | dritter Sensor |
| 27 | vierter Sensor |

| $T_{in}$ | Eintriebsmoment |
| $T_1$ | Drehmoment des Getriebeeingangs |
| $T_2$ | Drehmoment des Getriebeausgangs |
| $n_1$ | Drehzahl des Getriebeeingangs |
| $n_2$ | Drehzahl des Getriebeausgangs |
| $\alpha(t)$ | Winkelbeschleunigung |
| $J_y$ | axiales Trägheitsmoment |
| $J_4$ | Trägheitsmoment am Getriebeausgang |
| $J_5$ | Trägheitsmoment am Getriebeeingang |

**Patentansprüche**

1. Verfahren (100) zum Steuern, insbesondere Regeln, eines Prüfstands (1) für einen Antriebsstrang mit einem realen Getriebe (3) folgende Arbeitsschritte aufweisend:

   - Berechnen (102) eines Soll (n) eines Steuerparameters des Getriebeausganges (4) des realen Getriebes (3) auf der Grundlage eines Modells (2), welches das Getriebe (3) und alle weiteren Komponenten der Abtriebsseite des Antriebsstrangs als virtuelle Komponenten (3', 9a, 9b, 10a, 10b, 11, 12) abbildet, auf der Grundlage wenigstens eines am Antriebsstrang (2) gemessenen Messparameters, wobei die weiteren Komponenten der Abtriebsseite des Antriebsstrangs nur als virtuelle Komponenten vorliegen; und
   - Steuern (103) des Prüfstands (1) auf der Grundlage des Solls (n).

2. Verfahren (100) nach Anspruch 1, wobei das Modell (2) Eigenschaften eines Fahrzeugs sowie Eigenschaften der Fahrbahn berücksichtigt.

3. Verfahren (100) nach Anspruch 1 oder 2, wobei das Modell (2) wenigstens ein Eintriebsmoment ($T_{in}$) des realen Getriebes (3) als, insbesondere zeitinvarianten, Eingangsparameter berücksichtigt.

4. Verfahren (100) nach einem der Ansprüche, des Weiteren folgenden Arbeitsschritt aufweisend:

   - Berechnen (101) eines Eintriebsmoments ($T_{in}$) auf der Grundlage eines axialen Trägheitsmoments ($J_y$) des realen Getriebes (3), einer mittels einer Messung bestimmten Winkelbeschleunigung ($\alpha(t)$) des Getriebeausgangs (4) des realen Getriebes (3) und eines gemessenen Drehmoments ($T_2$) des Getriebeausgangs (4) des realen Getriebes (3).

5. Verfahren (100) nach Anspruch 4, wobei ein aus der Winkelbeschleunigung ($\alpha(t)$) des Getriebeausgangs (4) und des axialen Trägheitsmoments des Getriebes berechnetes Drehmoment zu dem gemessenen Drehmoment ($T_2$) des Getriebeausgangs (4) addiert wird.

6. Verfahren (100) nach einem der vorhergehenden Ansprüche, wobei bei der Berechnung des Eintriebsmoments ($T_{in}$) und/oder des Solls (n) eine jeweils vorliegende Übersetzung des zu prüfenden Getriebes (3) berücksichtigt wird.

7. Verfahren (100) nach einem der Ansprüche 4 bis 6, wobei das axiale Trägheitsmoment in Abhängigkeit einer jeweils vorliegenden Übersetzung des zu prüfenden Getriebes (3) berücksichtigt wird.

8. Verfahren (100) nach einem der Ansprüche 4 bis 7, wobei das Drehmoment ($T_2$) des Getriebeausgangs (4) und/oder eine Drehzahl ($n_2$) des Getriebeausgangs (4) an dem Prüfstand (1) gemessen werden.

9. Verfahren (100) nach Anspruch 8, wobei das Drehmoment ($T_2$) am Getriebeausgang (4) und/oder die Winkelbeschleunigung ($\alpha$ (t)) des Getriebeausgangs (4) jeweils mittels eines Filters gefiltert wird/werden, wobei der Filter aus den folgenden Filtern gewählt wird: Tiefpassfilter zweiter Ordnung, Besselfilter, Butterworthfilter, Notchfilter, Kalmanfilter.

10. Verfahren (100) nach Anspruch 8 oder 9, wobei eine Drehzahl ($n_2$) des Getriebeausgangs (4) mittels weiterer Messwerte, beispielsweise einer Drehzahl ($n_1$) des Getriebeeingangs (5), berechnet und/oder stabilisiert wird.

11. Verfahren (100) nach einem der Ansprüche 4 bis 10, des Weiteren folgende Arbeitsschritte aufweisend:

- Berechnen (101a) der Winkelbeschleunigung ($\alpha$ (t)) des Getriebeausgangs aus der gemessenen, vorzugsweise stabilisierten, Drehzahl ($n_2$) des Getriebeausgangs (4); und/oder
- Messen (101b) der Winkelbeschleunigung ($\alpha$ (t)).

12. Verfahren (100) nach einem der Ansprüche 4 bis 11, des Weiteren folgenden Arbeitsschritt aufweisend:

- Berechnen oder Stabilisieren (101c) des Drehmoments ($T_2$) des Getriebeausgangs (4) mittels eines Drehmoments ($T_1$) des Getriebeeingangs (5).

13. Verfahren (100) nach einem der Ansprüche 4 bis 12, wobei das Drehmoment ($T_2$) des Getriebeausgangs (4) mittels einer Messung eines elektrischen Luftspaltmoments einer Belastungsmaschine (6) des Prüfstands (1) bestimmt wird.

14. Computerprogramm, das Anweisungen umfasst, welche, wenn sie von einem Computer ausgeführt werden, diesen dazu veranlassen, die Schritte eines Verfahrens gemäß einem der Ansprüche 1 bis 13 ausführen.

15. Computer-lesbares Medium, auf dem ein Computerprogramm nach Anspruch 14 gespeichert ist.

16. System (20) zum Steuern eines Prüfstands (1) für einen Antriebsstrang mit einem realen Getriebe (3), aufweisend:

- ein erstes Modul (21) zum Berechnen eines Solls (n) eines Steuerparameters am Getriebeausgang (4) des realen Getriebes (3) auf der Grundlage eines Modells (2), welches das Getriebe (3) und alle weiteren Komponenten der Abtriebsseite des Antriebsstrangs als virtuelle Komponenten (3', 9a, 9b, 10a, 10b, 11, 12) abbildet, auf der Grundlage wenigstens eines am Antriebsstrang (2) gemessenen Messparameters, wobei die weiteren Komponenten der Abtriebsseite des Antriebsstrangs nur als virtuelle Komponenten vorliegen; und
- ein zweites Modul (22) zum Steuern des Prüfstands (1) auf der Grundlage des Solls (n).

17. System (20) nach Anspruch 16, des Weiteren aufweisend:

- ein drittes Modul (23) zum Berechnen eines Eintriebsmoments ($T_{in}$) des Getriebes (3, 3'), insbesondere in Echtzeit, auf der Grundlage des axialen Trägheitsmoments ($J_y$) des realen Getriebes (3), einer mittels einer Messung bestimmten Winkelbeschleunigung ($\alpha$ (t)) des Getriebeausgangs (4) des realen Getriebes (3) und eines gemessenen Drehmoments ($T_2$) des Getriebeausgangs (4) des realen Getriebes (3).

18. System (20) nach Anspruch 17, des Weitern aufweisend:

- einen ersten Sensor (24) zur Bestimmung der Winkelbeschleunigung ($\alpha$ (t)) des Getriebeausgangs (4); und
- einen zweiten Sensor (25) zur Messung des Drehmoments ($T_2$) des Getriebeausgangs (4).

**Claims**

1. Method (100) for controlling, in particular regulating, a test bench (1) for a drivetrain with a real transmission (3), having the following working steps:

- calculating (102) a target (n) of a control parameter of the transmission output (4) of the real transmission (3) on the basis of a model (2) which represents the transmission (3) and all further components of the output side of the drivetrain as virtual components (3', 9a, 9b, 10a, 10b, 11, 12), on the basis of at least one measurement parameter measured on the drivetrain (2), the further components of the output side of the drivetrain being present only as virtual components; and
- Controlling (103) the test stand (1) based on the target (n).

2. The method (100) according to claim 1, wherein the model (2) takes into account characteristics of a vehicle as well as characteristics of the roadway.

3. Method (100) according to claim 1 or 2, wherein the model (2) takes into account at least one input torque ($T_{in}$) of the real transmission (3) as an, in particular time-invariant, input parameter.

4. The method (100) according to any one of the claims, further comprising the following step:

- Calculating (101) an input torque ($T_{in}$) based on an axial moment of inertia ($J_y$) of the real transmission (3), an angular acceleration ($\alpha$ (t)) of the transmission output (4) of the real transmission (3) determined by means of a measurement, and a measured torque ($T_2$) of the transmission output (4) of the real transmission (3).

5. The method (100) of claim 4, wherein a torque calculated from the angular acceleration ($\alpha$ (t)) of the transmission output (4) and the axial moment of inertia of the transmission is added to the measured torque ($T_2$) of the transmission output (4).

6. Method (100) according to one of the preceding claims, wherein a respective existing transmission ratio of the transmission (3) to be tested is taken into account when calculating the input torque ($T_{in}$) and/or the target (n).

7. Method (100) according to any one of claims 4 to 6, wherein the axial moment of inertia is taken into account as a function of a respective existing transmission ratio of the transmission (3) to be tested.

8. Method (100) according to any one of claims 4 to 7, wherein the torque ($T_2$) of the transmission output (4) and/or a speed ($n_2$) of the transmission output (4) are measured at the test bench (1).

9. The method (100) according to claim 8, wherein the torque ($T_2$) at the transmission output (4) and/or the angular acceleration ($\alpha$ (t)) of the transmission output (4) is/are each filtered by means of a filter, wherein the filter is selected from the following filters: Second-order low-pass filter, Bessel filter, Butterworth filter, notch filter, Kalman filter.

10. Method (100) according to claim 8 or 9, wherein a speed ($n_2$) of the transmission output (4) is calculated and/or stabilized by means of further measured values, for example a speed ($n_1$) of the transmission input (5).

11. The method (100) according to any one of claims 4 to 10, further comprising the following steps:

- Calculating (101a) the angular acceleration ($\alpha$ (t)) of the transmission output from the measured, preferably stabilized, speed ($n_2$) of the transmission output (4); and/or
- Measure (101b) the angular acceleration ($\alpha$ (t)).

12. A method (100) according to any one of claims 4 to 11, further comprising the following step:

- Calculating or stabilizing (101c) the torque ($T_2$) of the transmission output (4) by means of a torque ($T_1$) of the transmission input (5).

13. Method (100) according to any one of claims 4 to 12, wherein the torque ($T_2$) of the transmission output (4) is determined by means of a measurement of an electric air gap torque of a load machine (6) of the test bench (1).

14. A computer program comprising instructions which, when executed by a computer, cause the computer to perform the steps of a method according to any one of claims 1 to 13.

15. A computer-readable medium on which is stored a computer program according to claim 14.

16. System (20) for controlling a test bench (1) for a drivetrain with a real transmission (3), comprising:

- a first module (21) for calculating a setpoint (n) of a control parameter at the transmission output (4) of the real transmission (3) on the basis of a model (2) which represents the transmission (3) and all further components of the output side of the drivetrain as virtual components (3', 9a, 9b, 10a, 10b, 11, 12), on the basis of at least one measurement parameter measured on the drivetrain (2), the further components of the output side of the drivetrain being present only as virtual components; and
- a second module (22) for controlling the test bench (1) based on the set point (n).

17. The system (20) of claim 16, further comprising:

- a third module (23) for calculating an input torque ($T_{in}$) of the transmission (3, 3'), in particular in real time, on the basis of the axial moment of inertia ($J_y$) of the real transmission (3), an angular acceleration ($\alpha$ (t)) of the transmission output (4) of the real transmission (3) determined by means of a measurement, and a measured torque ($T_2$) of the transmission output (4) of the real transmission (3).

18. The system (20) of claim 17, further comprising:

- a first sensor (24) for determining the angular acceleration ($\alpha$ (t)) of the transmission output (4); and
- a second sensor (25) for measuring the torque ($T_2$) of the transmission output (4).

## Revendications

1. Procédé (100) permettant de commander, en particulier de régler, un banc d'essai (1) pour une chaîne cinématique avec une transmission réelle (3), présentant les étapes de travail suivantes :

- de calcul (102) d'une valeur théorique (n) d'un paramètre de commande de la sortie de transmission (4) de la transmission réelle (3) sur la base d'un modèle (2) qui reproduit la transmission (3) et tous les autres composants du côté sortie de la chaîne cinématique en tant que composants virtuels (3', 9a, 9b, 10a, 10b, 11, 12), sur la base d'au moins un paramètre de mesure mesuré sur la chaîne cinématique (2), dans lequel les autres composants du côté sortie de la chaîne cinématique ne sont présents que sous forme de composants virtuels, et
- de commande (103) du banc d'essai (1) sur la base de la valeur de consigne (n).

2. Procédé (100) selon la revendication 1, dans lequel le modèle (2) tient compte des caractéristiques d'un véhicule ainsi que des propriétés de la chaussée.

3. Procédé (100) selon la revendication 1 ou 2, dans lequel le modèle (2) tient compte au moins d'un couple d'entrée ($T_{in}$) de la transmission réelle (3) en tant que paramètres d'entrée, en particulier non variables dans le temps.

4. Procédé (100) selon l'une quelconque des revendications, présentant par ailleurs l'étape de travail suivante :

- de calcul (101) d'un couple d'entrée ($T_{in}$) sur la base d'un moment d'inertie axial ($J_y$) de la transmission réelle (3), d'une accélération angulaire ($\alpha$ (t)), déterminée au moyen d'une mesure, de la sortie de transmission (4) de la transmission réelle (3) et d'un couple de rotation mesuré ($T_2$) de la sortie de transmission (4) de la transmission réelle (3).

5. Procédé (100) selon la revendication 4, dans lequel un couple de rotation calculé à partir de l'accélération angulaire ($\alpha$ (t)) de la sortie de transmission (4) et du moment d'inertie axial de la transmission est additionné au couple de rotation mesuré ($T_2$) de la sortie de transmission (4).

6. Procédé (100) selon l'une quelconque des revendications précédentes, dans lequel une démultiplication respectivement existante de la transmission (3) à tester est prise en compte lors du calcul du couple d'entrée ($T_{in}$) et/ou de la valeur de consigne (n).

7. Procédé (100) selon l'une quelconque des revendications 4 à 6, dans lequel le moment d'inertie axial est pris en compte en fonction d'une démultiplication respectivement existante de la transmission (3) à tester.

**8.** Procédé (100) selon l'une quelconque des revendications 4 à 7, dans lequel le couple de rotation ($T_2$) de la sortie de transmission (4) et/ou un régime ($n_2$) de la sortie de transmission (4) sont mesurés sur le banc d'essai (1).

**9.** Procédé (100) selon la revendication 8, dans lequel le couple de rotation ($T_2$) à la sortie de transmission (4) et/ou l'accélération angulaire ($\alpha$ (t)) de la sortie de transmission (4) sont respectivement filtrés au moyen d'un filtre, dans lequel le filtre est choisi parmi les filtres suivants : filtre passe-bas de deuxième ordre, filtre de Bessel, filtre de Butterworth, filtre Notch, filtre de Kalman.

**10.** Procédé (100) selon la revendication 8 ou 9, dans lequel un régime ($n_2$) de la sortie de transmission (4) est calculé et/ou stabilisé au moyen d'autres valeurs de mesure, par exemple d'un régime (m) de l'entrée de transmission (5).

**11.** Procédé (100) selon l'une quelconque des revendications 4 à 10, présentant par ailleurs les étapes de travail suivantes :

- de calcul (101a) de l'accélération angulaire ($\alpha$ (t)) de la sortie de transmission à partir du régime mesuré, de préférence stabilisé ($n_2$) de la sortie de transmission (4) ; et/ou
- de mesure (101b) de l'accélération angulaire ($\alpha$ (t)).

**12.** Procédé (100) selon l'une quelconque des revendications 4 à 11, présentant par ailleurs l'étape de travail suivante :

- de calcul ou de stabilisation (101c) du couple de rotation ($T_2$) de la sortie de transmission (4) au moyen d'un couple de rotation ($T_1$) de l'entrée de transmission (5).

**13.** Procédé (100) selon l'une quelconque des revendications 4 à 12, dans lequel le couple de rotation ($T_2$) de la sortie de transmission (4) est déterminé au moyen d'une mesure d'un couple d'entrefer électrique d'une machine d'application de charge (6) du banc d'essai (1).

**14.** Programme informatique qui comprend des instructions qui, lorsqu'elles sont exécutées par un ordinateur, l'amènent à exécuter les étapes d'un procédé selon l'une quelconque des revendications 1 à 13.

**15.** Support lisible par ordinateur, sur lequel est stocké un programme informatique selon la revendication 14.

**16.** Système (20) permettant de commander un banc d'essai (1) pour une chaîne cinématique avec une transmission réelle (3), présentant :

- un premier module (21) permettant de calculer une valeur de consigne (n) d'un paramètre de commande à la sortie de transmission (4) de la transmission réelle (3) sur la base d'un modèle (2) qui reproduit la transmission (3) et tous les autres composants du côté sortie de la chaîne cinématique en tant que composants virtuels (3', 9a, 9b, 10a, 10b, 11, 12), sur la base d'au moins un paramètre de mesure mesuré sur la chaîne cinématique (2), dans lequel les autres composants du côté sortie de la chaîne cinématique ne sont présents qu'en tant que composants virtuels, et
- un deuxième module (22) permettant de commander le banc d'essai (1) sur la base de la valeur de consigne (n).

**17.** Système (20) selon la revendication 16, présentant par ailleurs :

- un troisième module (23) permettant de calculer un couple d'entrée ($T_{in}$) de la transmission (3, 3'), en particulier en temps réel, sur la base du moment d'inertie axial ($J_y$) de la transmission réelle (3), une accélération angulaire ($\alpha$ (t)), déterminée au moyen d'une mesure, de la sortie de transmission (4) de la transmission réelle (3) et un couple de rotation mesuré ($T_2$) de la sortie de transmission (4) de la transmission réelle (3).

**18.** Système (20) selon la revendication 17, présentant par ailleurs :

- un premier capteur (24) permettant de déterminer l'accélération angulaire ($\alpha$ (t)) de la sortie de transmission (4) ; et
- un deuxième capteur (25) permettant de mesurer le couple de rotation ($T_2$) de la sortie de transmission (4).

**Fig. 1**

EP 3 607 294 B1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011022746 A1
- AT 514725 B1
- WO 2016012575 A1
- WO 2011038429 A1
- EP 2161560 A2
- US 2016327451 A1
- WO 2016102555 A1